Europäisches Patentamt

European Patent Office

Office européen des brevets

(19)

(11) Veröffentlichungsnummer: **0 098 826**
**B1**

(12) **EUROPÄISCHE PATENTSCHRIFT**

(45) Veröffentlichungstag der Patentschrift:
**29.01.86**

(51) Int. Cl.⁴: **C 12 J 1/00**

(21) Anmeldenummer: **83890107.2**

(22) Anmeldetag: **29.06.83**

(54) **Verfahren zur chargenweisen Herstellung von Essig.**

(30) Priorität: **02.07.82 AT 2571/82**

(43) Veröffentlichungstag der Anmeldung:
**18.01.84 Patentblatt 84/3**

(45) Bekanntmachung des Hinweises auf die Patenterteilung:
**29.01.86 Patentblatt 86/5**

(84) Benannte Vertragsstaaten:
**BE DE FR GB IT LU NL**

(56) Entgegenhaltungen:
**AT - A - 359 455**
**DE - A - 1 517 879**
**FR - A - 2 496 688**

(73) Patentinhaber: **Vogelbusch Gesellschaft m.b.H.,
Blechturmgasse 11, A-1050 Wien (AT)**

(72) Erfinder: **Nodes, Franz, Kopalgasse 72, A-1110 Wien (AT)**

(74) Vertreter: **Itze, Peter, Dipl.-Ing. et al, Patentanwälte
Dipl.-Ing. Leopold Friebel Dipl.-Ing. Peter Itze
Zieglergasse 57/11, A-1070 Wien (AT)**

ACTORUM AG

## Beschreibung

Die Erfindung bezieht sich auf ein Verfahren zur chargenweisen Herstellung von Essig mit etwa 10-16 g Essigsäure/100 ml Essig durch submerse Vergärung von alkoholhältigen Maischen.

Bei einem bekannten Verfahren dieser Art wird zum Bereiten der Startmaische entweder ein submers gewonnener bakterienhältiger, unter Luftzutritt zur ruhenden Oberfläche gelagerter Essig mit einem Säuregehalt von 10-13 g Essigsäure/ 100 ml Essig und 0,5-1,5 Vol.-% Alkohol verwendet, der mit alkoholhältiger Maische mit einem Gehalt von 2 g Essigsäure/100 ml Maische und etwa 10-14 Vol.-% Alkohol vermischt wird, oder es wird bakterienfreier Essig mit einem Gehalt von etwa 10-12 g Essigsäure/100 ml Essig und 0,0-0,5 Vol.-% Alkohol mit alkoholhältiger Maische mit einem Gehalt bis 2 g Essigsäure/100 ml Essig und etwa 10-14 Vol.-% Alkohol gemischt, so dass die Startmaische einen Gehalt von 6-9 g Essigsäure/100 ml Maische und 4-7 Vol.-% Alkohol aufweist. Im folgenden ist stets die Alkoholkonzentration in Vol.-% und die Essigsäurekonzentration in gemischten Prozenten, das ist in g/100 ml, angegeben. Die Summe dieser beiden Grössen wird als Gesamtkonzentration bezeichnet. Die gemäss der zweiten Variante mit bakterienfreiem Essig bereitete Startmaische wird mit einem Essigsäurebakterien enthaltenden belüfteten submersen Gärsubstrat beimpft. Die Zugabe des Impfsubstrates erfolgt dabei in die belüftete Startmaische, wobei die Belüftung derselben ohne Unterbrechung fortgesetzt wird. Nach Erreichen einer Alkoholkonzentration nahe Null wird ein Teil des fertigen Essigs aus dem Gärtrank entfernt und durch frische Maische ersetzt.

Dabei war man bisher der Ansicht, dass ein durch jahrelange Adaption geschaffener Acetobacterstamm seine Eigenschaften, d.h. Verträglichkeit von hohen Gesamt- und Essigsäurekonzentrationen, nur in einer laufenden submersen hochprozentigen Gärung mit über 10% Gesamtkonzentration beibehält, oder wenn aus einer solchen Gärung Essig vor Beendigung der Gärung mit einem Essigsäuregehalt von etwa 10-13 g/ 100 ml und 0,5-1,5 Vol.-% Alkohol ausgestossen und dieser unbehandelte Essig unter Luftzutritt zur ruhenden Oberfläche gelagert wird.

Infolge der ungünstigen Lebensbedingungen für die Acetobacter während der unterschiedlich langen Lagerdauer, wie z.B. hohe Essigsäurekonzentration, geringer Restalkoholgehalt, minimales Nährstoffangebot und schlechte Sauerstoffversorgung, beträgt die Anlaufzeit eines Fermenters bei Verwendung von einem auf diese Weise gelagerten sogenannten «Impfessig» zur Startmaischebereitung mit einem Essigsäuregehalt von 6-9 g/100 ml und 4-7% Alkohol meist zwischen 7 und 14 Tagen, wobei bei hoher Anlaufgesamtkonzentration, z.B. von 13%, und entsprechendem Alter des Impfessigs die Anlaufzeit bis zu 20 Tagen betragen kann.

Bei Verwendung von filtriertem, hochprozentigem Essig und entsprechender Maische mit einem Essigsäuregehalt von bis zu 2 g/100 ml und etwa 10-14% Alkohol zur Startmaischebereitung mit 6-9 g Essigsäure/100 ml und 4-7% Alkohol sowie Beimpfung mit 2-5 l submers gärendem Substrat pro 10 000 l Startmaische beträgt die Anlaufzeit des Fermenters je nach Höhe der Startmaische-Gesamtkonzentration immerhin noch 5 bis 10 Tage.

Der Erfindung liegt die Aufgabe zugrunde, ein Verfahren der eingangs genannten Art zu schaffen, welches ermöglicht, die lange Startzeit einer submersen Essiggärung gegenüber den bekannten Verfahren nennenswert zu verkürzen, um dadurch Energie einzusparen und die Alkoholverluste, die in der Startphase besonders hoch sind, zu reduzieren.

Erfindungsgemäss wird diese Aufgabe dadurch gelöst, dass eine Essigsäurebakterien enthaltende Startmaische mit 4-4,5 g Essigsäure/100 ml Maische und 3-3,5 Vol.-% Alkohol angesetzt, die Temperatur auf 28°C steigen gelassen und auf diesem Wert gehalten wird, worauf nach Einsetzen der Gärung bereits in der Anlaufperiode hochprozentiges alkoholhältiges Nährsubstrat, vorzugsweise mit etwa 2,5 g Essigsäure/100 ml Substrat und etwa 39 Vol.-% Alkohol, zugesetzt und der Fermenterinhalt abgegoren wird. Durch eine solche Gärführung kann der eingesetzte Acetobacterstamm die ihm adaptierten Eigenschaften, wie Verträglichkeit einer hohen Essigsäurekonzentration und einer hohen Gesamtkonzentration, wieder rasch zur Geltung bringen, wodurch eine erhebliche Verkürzung der Anlaufphase erzielt ist.

Vorteilhafterweise kann die Zufuhr von hochprozentigem alkoholhältigem Nährsubstrat schrittweise bis zur Erreichung einer Gesamtkonzentration von 10-16% durchgeführt werden, wodurch den Mikroorganismen die Wiederanpassung an die hohen Konzentrationen leicht fällt. Dabei kann die Gesamtkonzentration durch die schrittweise Zufuhr des Nährsubstrates jeweils um 1-1,5% erhöht werden, wodurch erreicht wird, dass es zu keiner Verlangsamung der Gärgeschwindigkeit kommt. Es zeigt sich also, dass die Mikroorganismen, im Gegensatz zur bisherigen Meinung, ihre adaptierten Eigenschaften auch über einen längeren Zeitraum in einer Startmaische mit einem Essigsäuregehalt von 4,5 g/100 ml und einem Alkoholgehalt von 3,4% beibehalten. Zum Ansetzen der Startmaische kann dabei einem aus einer Essiggärung stammenden abgegorenen Gärsubstrat mit 0,1-0,2 Vol.-% Alkohol und 10-16 g Essigsäure/100 ml Substanz unter Belüftung, gegebenenfalls mit zusätzlichen Nährstoffen versetzte, alkoholhältige Maische mit niedriger Gesamtkonzentration zugesetzt werden, bis das Verhältnis Essigsäure zu Alkohol etwa 1:1 und die Gesamtkonzentration etwa 7,8-8% beträgt, worauf die Gärung unter Luftzufuhr fortgesetzt wird, bis das Verhältnis Essigsäure zu Alkohol etwa 1,2:1 beträgt. Die Erniedrigung der Gesamtkonzentration, das relativ günstige Säure-Alkohol-Verhältnis von 1,1-1,2:1 sowie das reichliche Nährstoffangebot führen zu einer erhöhten Bildung von Zellinhaltsstoffen bei den Essigsäurebakterien. Dabei kann die hergestellte Startmaische in einem Lagertank unter periodischer Belüftung zwischengelagert werden. Dadurch und zusammen mit der erhöhten Bildung von Zellinhaltsstoffen erhält ein Grossteil der Essigsäurebakterien ihre Vermehrungsfähigkeit. Der Startmaischelagertrank ist im Inneren mit einer Ringleitung aus säurebeständigem Stahl versehen, die über die gesamte Fäche Bohrungen mit definierten Durchmessern aufweist, um ölfrei Luft mittels Gebläse oder Kompressor in die lagernde Startmaische eintragen und verteilen zu können. Der Lufteintrag erfolt dabei automatisch, wobei in Abständen von drei Minuten bis sechs Stunden jeweils während 1-10 min 1-10 Nm³ Luft eingetragen werden. Die Intervallzeit, Zeitdauer der Belüftung und die Belüftungsrate sind von der voraussichtlichen Lagerzeit der Startmaische abhängig. Es kann jedoch zum Ansetzen der Startmaische pasteurisierter Alkoholessig mit einem Gehalt von 4,45 g Essigsäure/100 ml Alkoholessig und 3,4 Vol.-% Alkohol mit Essigsäurebakterien enthaltender Maische und Bakteriennährsubstanzen vermischt werden, wodurch gleichfalls rasch eine erhöhte Bildung von Zellinhaltsstoffen erzielt wird. Die Zufuhr des hochprozentigen, alkoholhältigen Nährsubstrates kann bei Erreichen eines Restalkoholgehaltes von etwa 0,4-0,6 Vol.-% eingeleitet werden, wodurch das frische Nährsubstrat in die noch voll gärende Maische eingebracht wird, so dass die Mikroorganismen keine neuerliche Anlaufphase benötigen.

Nachstehend wird an Hand von Ausführungsbeispielen der erfindungsgemässe Verfahrensablauf eingehend dargelegt.

*Beispiel 1:*

Aus einem in voller Gärung befindlichen Fermenter werden 20000 l Essig ausgestossen und 8500 l Spritmaische mit einem Essigsäuregehalt von 0,36 g/100 ml und einem Alkoholgehalt von 5,54% zugestossen. Der Fermenterinhalt wird nun mit gleichbleibender Belüftungsintensität von 140 Nm³/h weitervergoren, bis der Essigsäuregehalt von 4,5 g/100 ml und ein Alkoholgehalt von 3,5% erreicht ist. Dann wird die gesamte Menge in einen Startmaischelagertank ausgestossen, wo diese Startmaische unter Luftzutritt gelagert wird, wobei sechsmal täglich je eine Minute hindurch 1 Nm³ Luft über die Ringleitung in die Startmaische eingetragen wird.

10 000 l dieser so hergestellten Startmaische mit einer Essigsäurekonzentration von 4,5 g/100 ml und 3,5 Vol.-% Alkohol wurden nach einer Lagerzeit von zwei Monaten zum Start einer Essiggärung mit einer Temperatur von 22° C in einen Fermenter gepumpt und mit 10 Nm³/h belüftet. Nach einem Tag hatte sich die Temperatur im Fermenter bereits selbsttätig auf 28° C erhöht. Am dritten Tag setzte dann die Zunahme des Essigsäuregehalts der Maische ein. Am Morgen dieses Tages wurde die Belüftungsmenge dann auf 30 Nm³/h und am Abend desselben Tages auf 50 Nm³/h erhöht, wodurch am vierten Tage dann der Essigsäuregehalt bereits auf 7,05 g/100 ml angestiegen und der Alkoholgehalt auf 1,7% gesunken war. Dann wurden 400 l Denaturat, welches einen Säuregehalt von 2,5 g/100 ml und einen Alkoholgehalt von 39 Vol.-% aufwies, zugesetzt, wodurch sich eine Essigsäurekonzentration von 7,0 g/100 ml und ein Alkoholgehalt von 1,9 Vol.-% einstellte. Diese Maische wurde dann vergoren, wobei die Belüftungsmenge auf 60 Nm³/h erhöht wurde. Nach einigen Stunden wurden weitere 450 l Denaturat und 7,5 kg zusätzliche Bakteriennährstoffe zugesetzt. Diese Maische liess man einige Stunden gären, worauf dann weitere 550 l Denaturat zugesetzt und die Belüftungsmenge auf 70 Nm³/h gesteigert wurde. Zu Beginn des fünften Tages wurden weitere 450 l Denaturat und 7,5 kg zusätzliche Bakteriennährstoffe zugesetzt und die Maische weitervergoren, bis die Essigsäurekonzentration 12 g/100 ml und der Alkoholgehalt annähernd 1 Vol.-% erreicht hatte. Dann wurden 6000 l Spritmaische mit einem Essigsäuregehalt von etwa 0,8 g/100 ml und einem Alkoholgehalt von 12,5 Vol.-% unter gleichzeitiger Erhöhung der Belüftungsmenge auf 105 Nm³/h zugesetzt. Zu Beginn des sechsten Tages wurden weitere 6150 l Spritmaische gleicher Zusammensetzung zugestossen und die Belüftung auf 140 Nm³/h gesteigert. Der Fermenter enthielt nun die gesamte Füllmenge von 24000 l. Es wurde nun weitervergoren, bis die Maische einen Essigsäuregehalt von etwa 12,5 g/100 ml und einen Alkoholgehalt von 0,1% aufwies, worauf dann 8000 l fertigen Essigs mit einer der Maischezusammensetzung analogen Zusammensetzung ausgstossen wurden. Danach wurden 8000 l frische Spritmaische zugesetzt und die Maische vergoren. Die Gärung lief nun mit gleicher Versäuerungsleistung weiter. Die Ausstösse erfolgten dann immer mit 0,1 Vol.-% Restalkohol. Der Alkoholgehalt nach jedem Spritmaischezustoss wurde auf maximal 3,5 Vol.-% eingestellt.

*Beispiel 2:*

Es wurden 10000 l Startmaische mit 4,45 g/100 ml Essigsäure und 3,4 Vol.-% Alkohol aus pasteurisiertem Alkoholessig und normaler Maische direkt im Fermenter zusammengestellt. Der Startmaische wurden 15 kg Bakteriennährstoff zugesetzt, welcher aus Glucose, Monoammonphosphat, Kaliumsulfat, Mangesiumsulfat, organischen Komponenten und Spurenstoffen bestand.

Nach Erwärmung der Startmaische auf 28° C wurde der belüftete Fermenterinhalt mit 5 l gärendem Impfsubstrat, enthaltend 4,38 g/100 ml Essigsäure und 3,26 Vol.-% Alkohol beimpft. 36 Stunden später war bereits ein Säureanstieg von 0,1 g/100 ml Essigsäure festzustellen, was bedeutet, dass die Essiggärung bereits in Gang gekommen war. Nach weiteren 20 Stunden betrug der Essigsäuregehalt 7 g/100 ml, der Restalkoholgehalt 0,48 Vol.-%. Es erfolgte dann der erste Zustoss von 450 l Denaturat mit 2,5 g/100 ml Essigsäure und 39 Vol.-% Alkohol. Die weiteren Denaturatzustösse wurden jeweils bei einem Restalkoholgehalt von 0,4-0,8 Vol.-% vorgenommen, so dass eine schrittweise Erhöhung der Gesamtkonzentration eintrat. Dieser Vorgang wurde so oft wiederholt, bis eine Gesamtkonzentration von 13,2% im Gärsubstrat erreicht war. Eine der Alkoholmenge äquivalente erforderliche Nährstoffmenge wurde bei den Denaturatzustössen berücksichtig. Die daran anschliessende Herstellung von hochprozentigem Essig wurde unter Einsatz von Spritmaischen mit 14-16% Gesamtkonzentration weitergeführt.

Bei beiden Ausführungsbeispielen wurden die Alkoholwerte der Anlaufphase sowie der danach normal geführten Gärchargen unter Verwendung von Spritmaischen mit 0,8-0,96 g/100 ml Essigsäure und 12-15,4 Vol.-% Alkohol mit einem kontinuierlich arbeitenden Gasanalysengerät laufend ermittelt und angezeigt. Das Messprinzip dieses Gerätes beruht auf der Änderung des elektrischen Widerstandes eines durch einen Halbleiter gebildeten Gassensors in Abhängigkeit von der Alkoholkonzentration. Der Gassensor befindet sich in einer Messsonde, welche im Substratraum des Essigfermenters eingebaut ist. Der im Gärsubstrat befindliche Alkohol permeiert durch einen in das Gärsubstrat eingetauchten Membranfinger in ein Trägergas, mittels welchem der einpermeierte Alkohol dem Gassensor zugeführt wird.

Im Gasanalysengerät ist ein Mikrocomputer integriert, in dem Festwerte gespeichert sind und welchem veränderliche Daten zusätzlich frei eingegeben werden können. Bei letzteren handelt es sich um die gewünschten Grenzwerte (Limits), wie z.B. Restalkoholwerte.

Der Einsatz des Gasanalysengerätes macht es mit Hilfe von zwei frei eingebbaren Limits möglich, den Restalkoholgehalt während des etwa 90 min. dauernden Ausstosses mit nur geringen Abweichungen konstant bei z.B. 0,1 Vol.-% Alkohol zu halten.

Limit I leitet z.B. bei 0,12 Vol.-% Restalkoholgehalt den Ausstoss ein, bis der gewünschte einstellbare Minimalfüllstand des Fermenters erreicht ist. Die Zeitdauer des Ausstossens beträgt je nach Fermentgrösse, Leitungsquerschnitt und Pumpenförderleistung etwa 90 min. Da während der Ausstosszeit die Gärung und damit die Säurebildung weitergeht, u.zw. je nach Belüftungsrate unter stündlicher Bildung von 0,15-0,25 g/100 ml Essigsäure, würde die Gärung bei der vorgesehenen Ausstossdauer im ungünstigsten Fall bereits nach 30 Minuten zu Ende sein, was einen vollkommenen Gärstillstand zur Folge haben würde. Daher wird Limit II z.B. auf 0,1 Vol.-% Restalkoholgehalt eingestellt. Sobald dieser Wert in der Maische unterschritten wird, erfolgt der Einstoss von alkoholhältiger Maische über ein einstellbares Impuls-Pause-Zeitglied, u.zw. bis wieder ein Restalkoholgehalt von 0,12 Vol.-%, also Limit I, erreicht ist. Dieser Vorgang wiederholt sich so oft, bis der Minimalfüllstandskontakt des Fermenters erreicht ist, der die Ausstosspumpe ausschaltet und den Zustoss frischer Spritmaische einleitet. Es wird dann bis zum Maximalfüllstand zugestossen, wobei der Zustossvorgang temperaturgesteuert abläuft.

Ein zusätzliches Limit III, das dem temperaturgesteuerten Maischezustoss übergeordnet ist, begrenzt die maximale Alkoholkonzentration während bzw. nach dem Maischezustoss auf 3,5 Vol.-%, sofern nicht vorher der Maximalfüllstand des Fermenters erreicht ist. Durch die Begrenzung des Alkoholgehaltes auf 3,5 Vol.-% werden die «Alkoholausblasverluste» vermindert, die durch die Belüftung des Gärsubstrates entstehen, weil zu diesem Zeitpunkt der Alkoholgehalt des Gärsubstrates am höchsten ist.

Steht kein Gasanalysegerät zur Verfügung, dann wird der Ausstosszeitpunkt auf Grund der Versäuerungsgeschwindigkeit errechnet und der Ausstoss des fertigen Essigs über eine Zeituhr ausgelöst. Die Zufuhr der nötigen Maischemenge erfolgt in diesem Fall über einstellbare Impuls-Pause-Zeitglieder. Diese Intervalle müssen ebenfalls je nach Versäuerungsgeschwindigkeit des Gärsubstrates bzw. je nach Alkoholkonzentration der Maische errechnet werden, um den Alkoholgehalt während des Ausstossens mit ausreichender Genauigkeit konstant zu halten.

*Berechnungsbeispiel:*

Fermenter Type 600
Füllvolumen 24 000 l
Stündliche Säurezunahme gegen Ende der Gärung:
0,25 g/100 ml Essigsäure,
stündliche Alkoholverarbeitung des Fermenters:

$$\frac{24\,000\ l \times 0,25\%}{100} = 60\ l\ \text{reiner Alkohol,}$$

Alkoholgehalt der Maische: 12,0 Vol.-%,

$$\frac{60 \times 100}{12} = 500\ l\ \text{Maische pro Stunde}$$

werden verarbeitet.

Bei einer Ausstosszeit von 90 min entspricht dies einer Maischemenge von 750 l, die zugestossen werden muss, um den Alkoholgehalt im Gärsubstrat während des Ausstosses, z.B. bei etwa 0,1 Vol.-%, konstant zu halten.

Der Zustoss von Denaturat, Alkohol oder normaler Spritmaische erfolgt über eine Einstossdüse, welche in der zur Belüftungseinrichtung führenden Luftansaugleitung oberhalb des oberen Behälterbodens angeordnet ist.

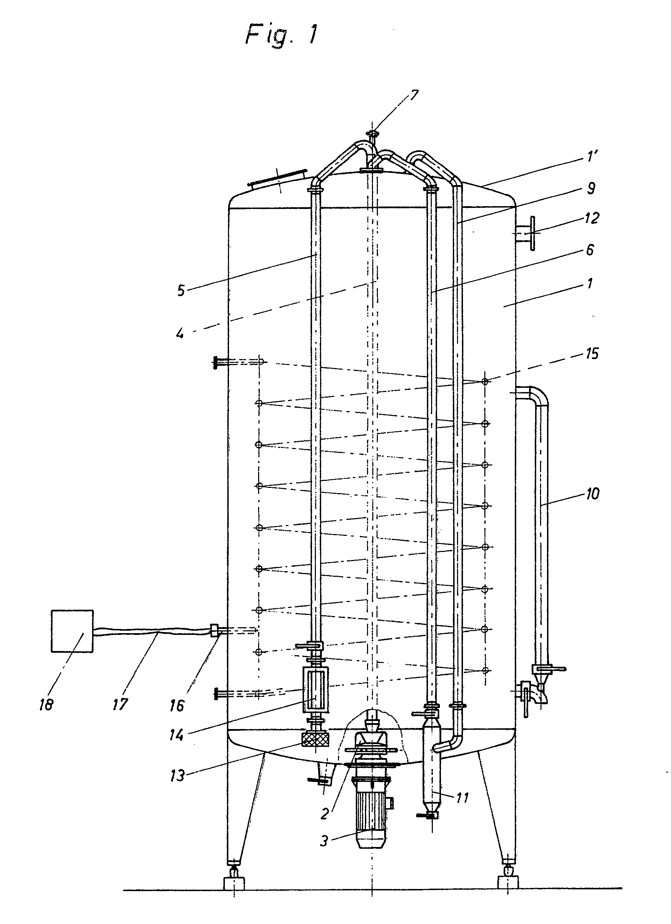

In der Zeichnung ist eine bevorzugte Ausbildung eines Fermenters zur Durchführung des erfindungsgemässen Verfahrens dargestellt. Es zeigt
Fig. 1 schematisch eine Seitenansicht des Fermenters und

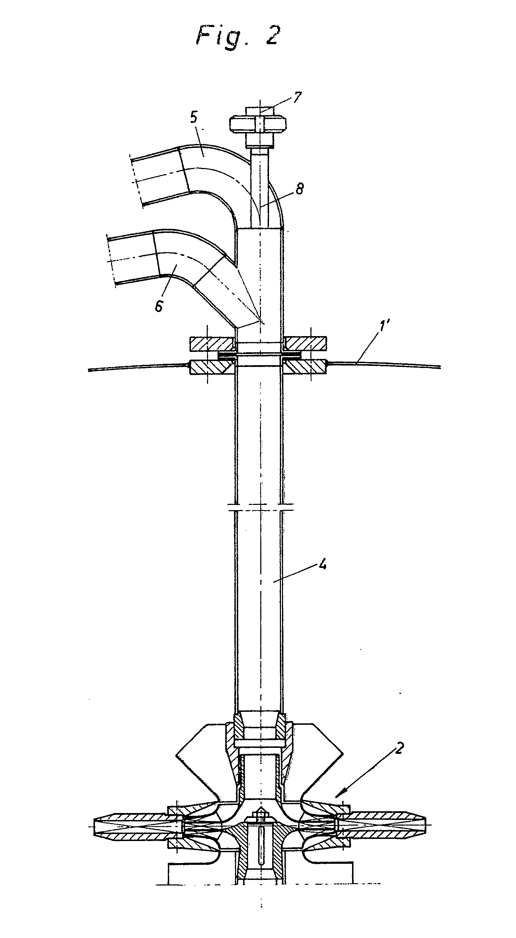

Fig. 2 eine die Luftzuführung mit der Einstossdüse und dem Belüfter wiedergebende Detaildarstellung.

Der Fermenter 1 weist eine Belüftungseinrichtung 2 auf, die von einem Motor 3 angetrieben wird und welcher durch eine zentrale Leitung 4 Luft zugeführt wird. In diese Luftzuführungsleitung 4 mündet oberhalb des oberen Fermenterbodens 1' eine Frischluftzuleitung 5 und eine Umluftleitung 6. Weiters mündet in diese Luftzuführungsleitung 4 oberhalb des oberen Fermenterbodens 1' noch eine Leitung 7, über welche über eine Einstossdüse 8 Spritmaische, Denaturat, 40%iger Alkoholessig od.dgl. in den Fermenter eingeführt wird. Dadurch kommt die Maische bereits mit Luft vermischt zu dem Belüfter, wodurch sofort eine innige Durchmischung der Maische und der Luft in dem Fermenterinhalt erfolgt. Die über die Leitung 6 in die Luftzuführungsleitung 4 eingebrachte Umluft wird dabei über eine vom oberen Fermenterboden 1' ausgehende Leitung 9 aus dem Gasraum des Fermenters 1 angesaugt. Mit 10 ist die Schaumabzugsleitung bezeichnet. Die überschüssige Abluft wird über eine an einem Stutzen 12 angeschlossene, nicht dargestellte Abluftleitung abgeführt. Der Frischluftzuleitung 5 ist dabei ein Luftfilter 13 und ein Luftmengenmessgerät 14 vorgeschaltet. Zur Aufrechterhaltung der Gärtemperatur von 28° C ist der Fermenter 1 mit einer üblichen Kühlung 15 versehen.

Zur Überwachung des Gärablaufes ist eine in das Innere des Fermenters 1 ragende Sonde 16 vorgesehen, die über eine Messleitung 17 die ermittelten Daten in ein Gasanalysengerät 18 einspeist, welches dann den Ausstoss der abgegorenen Maische und den Zulauf frischer Maische steuert.

## Patentansprüche

1. Verfahren zur chargenweisen Herstellung von Essig mit etwa 10-16 g Essigsäure/100 ml Essig durch submerse Vergärung von alkoholhältigen Maischen, dadurch gekennzeichnet, dass eine Essigsäurebakterien enthaltende Startmaische mit 4-4,5 g Essigsäure/100 ml Maische und 3-3,5 Vol.-% Alkohol angesetzt wird, die Temperatur auf 28° C steigen gelassen und auf diesem Wert gehalten wird, worauf nach Einsetzen der Gärung bereits in der Anlaufperiode hochprozentiges alkoholhältiges Nährsubstrat, vorzugsweise mit etwa 2,5 g Essigsäure/100 ml Substrat und etwa 39 Vol.-% Alkohol, zugesetzt und der Fermenterinhalt abgegoren wird.

2. Verfahren nach Anspruch 1, dadurch gekennzeichnet, dass die Zufuhr von hochprozentigem alkoholhältigem Nährsubstrat schrittweise bis zur Erreichung einer Gesamtkonzentration von 10-16% durchgeführt wird.

3. Verfahren nach Anspruch 2, dadurch gekennzeichnet, dass die Gesamtkonzentration durch die schrittweise Zufuhr des Nährsubstrats jeweils um 1-1,5% erhöht wird.

4. Verfahren nach einem der Ansprüche 1 bis 3, dadurch gekennzeichnet, dass zum Ansetzen der Startmaische einem aus einer Essiggärung stammenden, abgegorenen Gärsubstrat, das 0,1-0,2 Vol.-% Alkohol und 10-16 g Essigsäure/100 ml Substrat enthält, unter Belüftung, gegebenenfalls mit zusätzlichen Nährstoffen versetzte, alkoholhältige Maische mit niedriger Gesamtkonzentration zugesetzt wird, bis das Verhältnis Essigsäure zu Alkohol etwa 1:1 und die Gesamtkonzentration etwa 7,8-8% beträgt, worauf die Gärung unter Luftzufuhr fortgesetzt wird, bis das Verhältnis Essigsäure zu Alkohol etwa 1,2:1 beträgt.

5. Verfahren nach Anspruch 4, dadurch gekennzeichnet, dass die hergestellte Startmaische in einem Lagertank unter periodischer zeitweiser Belüftung zwischengelagert wird.

6. Verfahren nach einem der Ansprüche 1 bis 3, dadurch gekennzeichnet, dass zum Ansetzen der Startmaische pasteurisierter Alkoholessig mit einem Gehalt von 4,45 g Essigsäure/100 ml Alkoholessig und 3,4 Vol.-% Alkohol mit Essigsäurebakterien enthaltender Maische und Bakteriennährsubstanzen vermischt wird.

7. Verfahren nach einem der Ansprüche 1 bis 6, dadurch gekennzeichnet, dass die Zufuhr des hochprozentigen, alkoholhältigen Nährsubstrats bei Erreichen eines Restalkoholgehalts von etwa 0,4-0,8 Vol.-% eingeleitet wird.

## Claims

1. A process for the batchwise preparation of vinegar with approximately from 10 to 16 g of acetic acid/100 ml of vinegar by submersed fermentation of alcohol-containing mashes, characterized in that a starting mash containing acetic acid bacteria with from 4 to 4.5 g of acetic acid/100 ml of mash and from 3 to 3.5% by volume of alcohol is prepared, the temperature is allowed to rise to 28° C and is held at this level, whereupon after the beginning of fermentation already in the starting period high-percentage alcohol-containing nutrient substrate, preferably with approximately 2.5 g of acetic acid/100 ml of substrate and approximately 39% by volume of alcohol is added and the fermenter content ferments.

2. A process according to Claim 1, characterized in that the supply of high-percentage alcohol-containing nutrient substrate is carried out in stages until a total concentration of from 10 to 16% is achieved.

3. A process according to Claim 2, characterized in that the total concentration is increased by the supply of the nutrient substrate in stages by from 1 to 1.5% in each case.

4. A process according to any one of Claims 1 to 3, characterized in that in order to prepare the starting mash, alcohol-containing mash, where appropriate mixed with additional nutrients, with a low total concentration is added to a fermentation substrate which has fermented and orginates in a vinegar fermentation and which contains from 0.1 to 0.2% by volume of alcohol and from 10 to 16 g of acetic acid/100 ml of substrate, with ventilation, until the acetic acid to alcohol ratio amounts to approximately 1:1 and the total concentration amounts to approximately from 7.8 to 8%, whereupon the fermentation is continued while air is supplied until the acetic acid to alcohol ratio amounts to approximately 1.2:1.

5. A process according to Claim 4, characterized in that the starting mash produced is meanwhile stored in a storage tank with periodic ventilation.

6. A process according to any one of Claims 1 to 3, characterized in that, in order to prepare the starting mash, pasteurized alcoholic vinegar with a content of 4.45 g of acetic acid/100 ml of alcoholic vinegar and 3.4% by volume of alcohol is mixed with mash containing acetic acid bacteria and with bacterial nutrients.

7. A process according to any one of Claims 1 to 6, characterized in that the supply of the high-percentage alcohol-containing nutrient substrate is initiated when a residual alcohol content of approximately from 0.4 to 0.8% by volume is achieved.

**Revendications**

1. Procédé de fabrication par charges successives de vinaigre contenant environ 10-16 g d'acide acétique/100 ml de vinaigre par fermentation immergée de moûts alcooliques, caractérisé par le fait que l'on prépare un moût de départ à 4-4,5 g d'acide acétique/100 ml de moût et 3-3,5% en volume d'alcool contenant des acetobacters, qu'on laisse la température monter à 28° C et qu'on la maintient à cette valeur, qu'on ajoute après le déclenchement de la fermentation, dès la période de démarrage, un substrat nutritif à haut pourcentage d'alcool, de préférence avec environ 2,5 g d'acide acétique/100 ml de substrat et environ 39% en volume d'alcool, et qu'on laisse fermenter le contenu du fermenteur.

2. Procédé suivant la revendication 1, caractérisé par le fait que l'apport de substrat nutritif à pourcentage élevé en alcool est poursuivi jusqu'à ce qu'on ait atteint une concentration totale de 10-16%.

3. Procédé suivant la revendication 2, caractérisé par le fait que la concentration totale est augmentée par les apports successifs de substrat nutritif, chaque fois de 1-1,5%.

4. Procédé suivant l'une des revendications 1 à 3, caractérisé par le fait que pour préparer le moût de départ on ajoute à un substrat fermenté provenant d'une fermentation acétique, qui contient 0,1-0,2% en volume d'alcool et 10-16 g d'acide acétique/100 ml de substrat, sous aération, des moûts alcooliques à faible concentration totale, le cas échéant additionnés d'éléments nutritifs supplémentaires, jusqu'à ce que le rapport de l'acide acétique à l'alcool soit environ 1:1 et la concentration totale environ 7-8%, après quoi la fermentation est poursuivie sous apport d'air jusqu'à ce que le rapport de l'acide acétique à l'alcool soit environ 1,2:1.

5. Procédé suivant la revendication 4, caractérisé par le fait que le moût de départ préparé est stocké intermédiairement dans une cuve de stockage où il est périodiquement ventilé pendant un certain temps.

6. Procédé suivant l'une des revendications 1 à 3, caractérisé par le fait que, pour préparer le moût de départ, on mélange du vinaigre d'alcool pasteurisé d'une teneur de 4,45 g d'acide acétique/100 ml de vinaigre d'alcool et 3,4% en volume d'alcool avec du moût contenant des acetobacters et des substances nutritives pour les bactéries.

7. Procédé suivant l'une des revendications 1 à 6, caractérisé par le fait que l'apport du substrat nutritif à pourcentage d'alcool élevé est déclenché lorsqu'on atteint une teneur en alcool résiduel d'environ 0,4-0,8% en volume.

# Fig. 1

# Fig. 2